(19) Europäisches Patentamt
European Patent Office
Office européen des brevets

(11) **EP 2 154 355 B1**

(12) **EUROPÄISCHE PATENTSCHRIFT**

(45) Veröffentlichungstag und Bekanntmachung des Hinweises auf die Patenterteilung:
**14.09.2011 Patentblatt 2011/37**

(51) Int Cl.:
*F02M 25/07* *(2006.01)*  *F02D 21/08* *(2006.01)*

(21) Anmeldenummer: 08104882.9

(22) Anmeldetag: **25.07.2008**

(54) **Aufgeladene Brennkraftmaschine mit Abgasrückführung**

Charged internal combustion engine with exhaust gas recirculation

Moteur à combustion interne suralimenté avec recyclage des gaz d'échappement

(84) Benannte Vertragsstaaten:
**DE FR GB**

(43) Veröffentlichungstag der Anmeldung:
**17.02.2010 Patentblatt 2010/07**

(73) Patentinhaber: **Ford Global Technologies, LLC Dearborn, MI 48126 (US)**

(72) Erfinder: **Yacoub, Yasser Mohammed Sayed 50858, Köln (DE)**

(74) Vertreter: **Drömer, Hans-Carsten Henry-Ford Str. 1 50725 Köln (DE)**

(56) Entgegenhaltungen:
**EP-A- 1 308 614      WO-A-99/15773
WO-A-2007/062682      WO-A-2007/129160
DE-A1- 10 053 675      DE-U1- 9 421 145
JP-A- 11 093 781      US-A1- 2006 021 327**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft eine aufgeladene Brennkraftmaschine mit mindestens einem Zylinder, mindestens einer Abgasleitung zum Abführen der Verbrennungsgase aus diesem mindestens einen Zylinder und mindestens einer Ansaugleitung zum Zuführen von Frischluft bzw. Frischgemisch in diesen mindestens einen Zylinder, die mit mindestens einem Abgasturbolader ausgestattet ist, wobei

- eine Turbine des mindestens einen Abgasturboladers in der mindestens einen Abgasleitung angeordnet ist und ein zu dieser Turbine zugehöriger Verdichter des mindestens einen Abgasturboladers in der mindestens einen Ansaugleitung angeordnet ist,
- eine erste Leitung zur Abgasrückführung vorgesehen ist, die stromabwärts der Turbine aus der mindestens einen Abgasleitung unter Ausbildung einer ersten Abzweigung abzweigt und stromaufwärts des Verdichters in die mindestens eine Ansaugleitung unter Ausbildung einer ersten Einmündung einmündet, und
- an der ersten Leitung (5) zur Abgasrückführung eine Vorrichtung (7) zum Zuführen von Luft vorgesehen ist.

Eine derartige Brennkraftmaschine offenbart beispielsweise das deutsche Gebrauchsmuster DE 94 21 145 U1.

Im Rahmen der vorliegenden Erfindung umfaßt der Begriff Brennkraftmaschine Dieselmotoren und Ottomotoren, aber auch Hybrid-Brennkraftmaschinen.

Die Aufladung von Brennkraftmaschinen gewinnt zunehmend an Bedeutung. In der Regel wird für die Aufladung ein Abgasturbolader eingesetzt, bei dem ein Verdichter und eine Turbine auf derselben Welle angeordnet sind, wobei der heiße Abgasstrom via Abgasleitung der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm via Ansaugleitung zugeführte Ladeluft, wodurch eine Aufladung des mindestens einen Zylinders erreicht wird.

Häufig wird eine Ladeluftkühlung vorgesehen, mit der die komprimierte Verbrennungsluft vor Eintritt in den Brennraum d.h. den mindestens einen Zylinder gekühlt wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel eine größere Luftmasse zugeführt werden kann. Dadurch können die Kraftstoffmasse und damit der Mitteldruck $p_{me}$ gesteigert werden.

Schwierigkeiten bereitet die Auslegung des Abgasturboladers, wobei grundsätzlich eine spürbare Leistungssteigerung in allen Drehzahlbereichen angestrebt wird. Nach dem Stand der Technik wird aber ein starker Drehmomentabfall bei Unterschreiten einer bestimmten Drehzahl beobachtet. Verständlich wird dieser Drehmomentabfall, wenn berücksichtigt wird, dass das Ladedruckverhältnis vom Turbinendruckverhältnis abhängt. Wird beispielsweise bei einem Dieselmotor die Motorendrehzahl verringert, führt dies zu einem kleineren Abgasrnassenstrom und damit zu einem kleineren Turbinendruckverhältnis. Dies hat zur Folge, dass zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden, was aber zu Nachteilen bei hohen Drehzahlen führt.

In der Praxis werden daher auch häufig zwei oder mehrere Abgasturbolader eingesetzt, deren Turbinen parallel und/oder in Reihe geschaltet sind. Die Verdichter können dabei ebenfalls in Reihe und/oder parallel angeordnet werden. Zur Verbesserung der Drehmentcharakteristik einer Brennkraftmaschine kann eine Abgasturboaufladung auch in Kombination mit einem Kompressor bzw. mechanischen Lader eingesetzt werden. Aus den genannten Gründen ist im Rahmen der vorliegenden Erfindung von mindestens einem Abgasturbolader die Rede.

Die Aufladung ist ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Brennkraftmaschinen, den Kraftstoffverbrauch zu minimieren d. h. den Wirkungsgrad der Brennkraftmaschine zu verbessern.

Mittels Aufladung können beim Dieselmotor die Stickoxidemissionen ohne Einbußen beim Wirkungsgrad verringert werden. Gleichzeitig können die Kohlenwasserstoffemissionen günstig beeinflußt werden. Die Emissionen an Kohlendioxid, die direkt mit dem Kraftstoffverbrauch korrelieren, nehmen mit sinkendem Kraftstoffverbrauch ebenfalls ab.

Die Aufladung eignet sich daher ebenfalls zur Reduzierung der Schadstoffemissionen. Um die zukünftigen Grenzwerte für Schadstoffemissionen einzuhalten, sind aber darüber hinaus weitere Maßnahmen erforderlich.

Im Focus steht dabei unter anderem die Reduzierung der Stickoxidemissionen, die insbesondere bei den Dieselmotoren von hoher Relevanz sind. Da die Bildung der Stickoxide nicht nur einen Luftüberschuß, sondern auch hohe Temperaturen erfordert, besteht ein Konzept zur Verringerung der Stickoxidemissionen darin, die Verbrennungstemperaturen zu senken.

Dabei ist die Abgasrückführung d. h. die Rückführung von Verbrennungsgasen aus der Abgasleitung in die Ansaugleitung zielführend, bei der mit zunehmender Abgasrückführrate die Stickoxidemissionen deutlich gesenkt werden können. Die Abgasrückführrate $x_{AGR}$ bestimmt sich dabei wie folgt:

$$x_{AGR} = m_{AGR} \, / \, (m_{AGR} + m_{Frischluft})$$

wobei $m_{AGR}$ die Masse an zurückgeführtem Abgas und $m_{Frischluft}$ die zugeführte - gegebenenfalls durch einen Verdichter geführte und komprimierte - Frischluft bzw. Verbrennungsluft bezeichnet.

Die Abgasrückführung eignet sich auch zur Reduzierung der Emissionen an unverbrannten Kohlenwasserstoffen im Teillastbereich.

Um eine deutliche Senkung der Stickoxidemissionen zu erreichen, sind hohe Abgasrückführraten erforderlich, die in der Größenordnung von $x_{AGR} \approx 60\%$ bis 70% liegen können.

Dadurch ergibt sich aber ein Konflikt beim Betrieb einer Brennkraftmaschine mit Abgasturboaufladung und gleichzeitiger Verwendung einer Abgasrückführung, wenn das rückgeführte Abgas stromaufwärts der Turbine aus der Abgasleitung entnommen wird. Bei einer Steigerung der Abgasrückführrate nimmt dann nämlich der der Turbine zugeführte Abgasstrom ab und folglich auch das Turbinendruckverhältnis und der Ladedruck.

Aus diesem Grunde sind Konzepte erforderlich, die ausreichend hohe Ladedrücke auch bei hohen Abgasrückführraten sicherstellen.

Daher werden Brennkraftmaschine zunehmend mit einer sogenannten Niederdruck-AGR ausgestattet d. h. das Abgas wird im Rahmen der Abgasrückführung nicht stromaufwärts der Turbine, sondern stromabwärts der Turbine aus der Abgasleitung entnommen. Dies hat den Vorteil, dass das rückzuführende Abgas vor der Rückführung die Turbine durchströmt und somit für den Antrieb der Turbine zur Verfügung steht. Hohe AGR-Raten d. h. große rückgeführte Abgasmengen führen dann nicht mehr automatisch zu einem Abfall des Turbinendruckverhältnisses und zu Einbußen beim Drehmomentangebot.

Zur Ausbildung einer Niederdruck-AGR wird bei der gattungsbildenden Brennkraftmaschine eine Leitung zur Abgasrückführung vorgesehen, die stromabwärts der Turbine aus der mindestens einen Abgasleitung unter Ausbildung einer ersten Abzweigung abzweigt und stromaufwärts des Verdichters in die mindestens eine Ansaugleitung unter Ausbildung einer ersten Einmündung einmündet.

Die Rückführung von Abgas aus der Abgasleitung in die Ansaugleitung erfordert grundsätzlich eine Druckdifferenz d. h. ein Druckgefälle, welches bei der beschriebenen Niederdruck-AGR durch den in der Ansaugleitung angeordneten Verdichter generiert wird.

Problematisch bei der Verwendung einer Niederdruck-AGR ist, dass einige Bestandteile des rückgeführten Abgasstroms, insbesondere das Wasser ($H_2O$) und die unverbrannten Kohlenwasserstoffe (HC), in der Rückführleitung auch aufgrund der abnehmenden Temperatur auskondensieren d. h. von der gasförmigen Phase in die flüssige Phase übergehen. Um das Auskondensieren zu verhindern, wird die Rückführleitung im Rahmen von Untersuchungen auf einem Motorenprüfstand beheizt.

Vor dem Hintergrund des oben Gesagten ist es die Aufgabe der vorliegenden Erfindung, eine aufgeladene Brennkraftmaschine gemäß dem Oberbegriff des Anspruchs 1 d. h. der gattungsbildenden Art bereitzustellen, mit der die nach dem Stand der Technik bekannten Nachteile überwunden werden und bei der insbesondere ein Auskondensieren von Abgasbestandteilen im rückgeführten Abgasstrom verhindert wird.

Gelöst wird die erste Teilaufgabe durch eine aufgeladene Brennkraftmaschine mit mindestens einem Zylinder, mindestens einer Abgasleitung zum Abführen der Verbrennungsgase aus diesem mindestens einen Zylinder und mindestens einer Ansaugleitung zum Zuführen von Frischluft bzw. Frischgemisch in diesen mindestens einen Zylinder, die mit mindestens einem Abgasturbolader ausgestattet ist, wobei

■ eine Turbine des mindestens einen Abgasturboladers in der mindestens einen Abgasleitung angeordnet ist und ein zu dieser Turbine zugehöriger Verdichter des mindestens einen Abgasturboladers in der mindestens einen Ansaugleitung angeordnet ist,

■ eine erste Leitung zur Abgasrückführung vorgesehen ist, die stromabwärts der Turbine aus der mindestens einen Abgasleitung unter Ausbildung einer ersten Abzweigung abzweigt und stromaufwärts des Verdichters in die mindestens eine Ansaugleitung unter Ausbildung einer ersten Einmündung einmündet, und

■ an der ersten Leitung zur Abgasrückführung eine Vorrichtung zum Zuführen von Luft vorgesehen ist, und die dadurch gekennzeichnet ist, dass

■ eine Versorgungsleitung (15) vorgesehen ist, die stromabwärts der Vorrichtung (7) zum Zuführen von Luft von der ersten Leitung (5) zur Abgasrückführung abzweigt und in die Ansaugleitung (4) mündet, wobei in dieser Versorgungsleitung (15) ein Gasspeicher (13) angeordnet ist.

Die erfindungsgemäße Brennkraftmaschine ist mit einer Vorrichtung ausgestattet, mit der Luft in die erste Leitung zur Abgasrückführung zugeführt werden kann, wobei die Luft zur Verdünnung des Abgasmassenstromes bzw. zur Vergrößerung des Massenstromes in der Rückführleitung dient. Bei der Abgasrückführung handelt es sich um eine Niederdruck-AGR.

Die Zuführung von Luft und die damit einhergehende Vergrößerung des Massenstromes führt zu einer Absenkung der Partialdrücke der einzelnen gasförmigen Abgasbestandteile und damit zu einer Herabsetzung ihrer Sättigungstemperatur, so dass - auch bei abnehmender Temperatur im Abgasstrom - einem Auskondensieren von Abgasbestandteilen, insbesondere des im Abgas enthaltenen Wassers ($H_2O$) und der unverbrannten Kohlenwasserstoffe (HC), entgegengewirkt wird bzw. dieses Auskondensieren bei einer ausreichend großen Menge an zugeführter Luft vollständig verhindert wird.

Zudem ist erfindungsgemäß eine Versorgungsleitung vorgesehen, die stromabwärts der Vorrichtung zum Zuführen von Luft von der ersten Leitung zur Abgasrückführung abzweigt und in die Ansaugleitung mündet, wobei in dieser Versorgungsleitung ein Gasspeicher angeordnet ist.

Der Gasspeicher dient der Verbesserung des Ansprechverhaltens der Niederdruck-AGR. Im instationären Betrieb der Brennkraftmaschine kann der Forderung nach einer erhöhten rückgeführten Abgasmenge schneller entsprochen werden, indem das angeforderte d. h. erforderliche Abgas direkt dem Gasspeicher entnommen wird. Hierzu ist der Gasspeicher in Betriebsphasen der Brennkraftmaschine, in denen keine oder aber nur eine geringe Abgasmenge via Niederdruck-AGR rückzuführen ist, mit Abgas zu bevorraten.

Die Versorgungsleitung, in der der Gasspeicher angeordnet ist, zweigt hierzu von der ersten Leitung zur Abgasrückführung ab und mündet stromaufwärts des Verdichters in die Ansaugleitung.

Da im Rahmen der Bevorratung des Gasspeichers der in der Ansaugleitung angeordnete Verdichter nicht für eine Förderung des Abgases in den Speicher zur Verfügung steht und der Gasspeicher von der Ansaugleitung auch getrennt werden können muß, sind Ausführungsformen der Brennkraftmaschine vorteilhaft, bei denen in der Versorgungsleitung eine Pumpe stromaufwärts des Gasspeichers und ein Absperrelement stromabwärts des Gasspeichers vorgesehen sind.

Damit wird die erste der Erfindung zugrunde liegende Aufgabe gelöst, nämlich eine aufgeladene Brennkraftmaschine bereitzustellen, bei der ein Auskondensieren von Abgasbestandteilen im rückgeführten Abgasstrom verhindert wird.

Die Luft wird vorzugsweise unmittelbar stromabwärts der ersten Abzweigung in die Ruckführleitung eingeleitet, damit nicht bereits stromaufwärts der Zuführstelle von Luft gasförmige Abgasbestandteile in die flüssige Phase übergehen d. h. auskondensieren.

Weitere vorteilhafte Ausführungsformen der Brennkraftmaschine werden im Zusammenhang mit den Unteransprüchen erörtert.

Vorteilhaft sind Ausführungsformen der Brennkraftmaschine, bei denen die Vorrichtung zum Zuführen von Luft eine Verbindung zu der ersten Leitung aufweist und ein Absperrelement zum Verschließen und Freigeben dieser Verbindung vorgesehen ist.

Das Absperrelement, vorzugsweise ein Ventil, dient zur Dosierung der zugeführten Luftmenge. Einsetzbar sind Absperrelemente, bei denen der Strömungsquerschnitt - vorzugsweise stufenlos - veränderbar ist, aber auch zweistufig schaltbare Absperrelemente, die zwischen einer Schließstellung und einer Offenstellung geschaltet werden können. Das Absperrelement kann elektrisch, hydraulisch, pneumatisch, mechanisch oder magnetisch steuerbar sein, vorzugsweise mittels der Motorsteuerung der Brennkraftmaschine.

Vorteilhaft sind insbesondere Ausführungsformen der Brennkraftmaschine, bei denen das Absperrelement ein in der ersten Leitung angeordnetes Drei-Zwei-Wege-Ventil ist.

Ein Drei-Zwei-Wege-Ventil hat drei Anschlüsse und zwei Schaltstellungen. Ein erster Anschluß des Ventils wird mit der Vorrichtung zum Zuführen von Luft verbunden, ein weiterer Anschluß mit der ersten Rückführleitung stromaufwärts des Ventils und der dritte Anschluß mit der ersten Rückführleitung stromabwärts des Ventils, von wo aus das Abgas bzw. das verdünnte Abgas via Rückführleitung zur Ansaugseite bzw. zum Verdichter geleitet wird.

In der ersten Schaltstellung strömt das von der Abgasleitung abgezweigte und rückzuführende Abgas durch das Ventil, wobei das Abgas am zweiten Anschluß eintritt und am dritten Anschluß austritt. Auf das Zuführen von Luft wird in dieser Schaltstellung verzichtet. Der erste Anschluß ist verschlossen. In der zweiten Schaltstellung strömt Luft durch den ersten Anschluß in das Ventil und tritt aus dem dritten Anschluß aus bzw. in die Rückführleitung ein. Der zweite Anschluß ist dabei verschlossen.

In keiner der beiden Schaltstellungen sind der erste und zweite Anschluß gleichzeitig geöffnet. Dadurch wird verhindert, dass Abgas aus der Rückführleitung über den ersten Anschluß in die Vorrichtung zum Zuführen von Luft eintritt und gegebenenfalls ungereinigt in die Umgebung austritt.

Vorteilhaft sind Ausführungsformen der Brennkraftmaschine, bei denen die erste Leitung zur Rückführung von Abgas in die Ansaugleitung übergeht. Bei dieser Ausführungsform ist die Ansaugleitung gewissermaßen die Forstsetzung der Rückführleitung der Niederdruck-AGR d.h. Rückführleitung und Ansaugleitung bilden zumindest stromabwärts der Vorrichtung zum Zuführen von Luft eine gemeinsame einzelne Leitung, so dass der Brennkraftmaschine Luft ausschließlich über die Vorrichtung zum Zuführen von Luft zugeführt wird bzw. werden kann.

Vorteilhaft sind Ausführungsformen der Brennkraftmaschine, bei denen die Vorrichtung zum Zuführen von Luft einen Filter umfaßt. Der Filter stellt sicher, dass die dem Abgas mittels Vorrichtung zugeführte Luft keine Verunreinigungen, insbesondere keine Partikel, enthält. Hierzu ist der Filter in der Weise anzuordnen, dass die für eine Zuführung vorgesehene Luft den Filter passieren muß.

Vorteilhaft sind Ausführungsformen der Brennkraftmaschine, bei denen stromabwärts der Turbine mindestens ein Abgasnachbehandlungssystem in der mindestens einen Abgasleitung vorgesehen ist, um die Schadstoffemissionen zu verringern.

Zur Reinigung bzw. Nachbehandlung können verschiedene Abgasnachbehandlungssysteme eingesetzt werden, beispielsweise katalytische Reaktoren, die unter Verwendung katalytischer Materialien, die die Geschwindigkeit bestimmter Reaktionen erhöhen, eine Oxidation von HC und CO auch bei niedrigen Temperaturen sicherstellen. Sollen zusätzlich Stickoxide reduziert werden, kann dies durch den Einsatz eines Dreiwegkatalysators erreicht werden, der dazu aber einen in engen Grenzen ablaufenden stöchiometrischen Betrieb ($\lambda \approx 1$) des Ottomotors erfordert. Dabei werden die Stickoxide $NO_x$ mittels der vorhandenen nicht oxidierten Abgaskomponenten, nämlich den Kohlenmonoxiden und den unverbrannten Kohlenwasserstoffen, reduziert, wobei gleichzeitig diese Abgaskomponenten oxidiert werden.

Bei Brennkraftmaschinen, die - zumindest zeitweise - mit einem Luftüberschuß betrieben werden, kann zur Oxidation der unverbrannten Kohlenwasserstoffe (HC) und von Kohlenmonoxid (CO) ein Oxidationskatalysator im Abgassystem vorgesehen werden.

Zur Reduzierung der Stickoxide werden häufig selektive Katalysatoren - sogenannte SCR-Katalysatoren - eingesetzt, bei denen gezielt Reduktionsmittel in das Abgas eingebracht wird, um die Stickoxide selektiv zu vermindern. Als Reduktionsmittel kommen neben Ammoniak und Harnstoff auch unverbrannte Kohlenwasserstoffe zum Einsatz.

Grundsätzlich können die Stickoxidemissionen auch mit einem sogenannten Stickoxidspeicherkatalysator (LNT - Lean $NO_x$ Trap) reduziert werden. Dabei werden die Stickoxide zunächst - während eines mageren Betriebs der Brennkraftmaschine - im Katalysator absorbiert d. h. gesammelt und gespeichert, um dann während einer Regenerationsphase beispielsweise mittels eines unterstöchiometrischen Betriebs (beispielsweise $\lambda < 0,95$) der Brennkraftmaschine bei Sauerstoffmangel reduziert zu werden.

Zur Minimierung der Emission von Rußpartikeln werden sogenannte regenerative Partikelfilter eingesetzt, die die Rußpartikel aus dem Abgas herausfiltern und speichern, wobei diese Rußpartikel im Rahmen der Regeneration des Filters intermittierend verbrannt werden. Hierzu ist Sauerstoff bzw. ein Luftüberschuß im Abgas erforderlich, um den Ruß im Filter zu oxidieren, was beispielsweise durch einen überstöchiometrischen Betrieb ($\lambda > 1$) der Brennkraftmaschine erreicht werden kann.

Bei aufgeladenen Brennkraftmaschinen, bei denen stromabwärts der Turbine mindestens ein Abgasnachbehandlungssystem in der mindestens einen Abgasleitung vorgesehen ist, sind Ausführungsformen vorteilhaft, bei denen das mindestens eine Abgasnachbehandlungssystem stromaufwärts der ersten Abzweigung angeordnet ist.

Durch diese Anordnung des Abgasnachbehandlungssystems wird sichergestellt, dass das abgezweigte und via Rückführleitung rückgeführte Abgas zuvor d. h. vor der Rückführung bzw. Abzweigung nachbehandelt wird und beispielsweise - falls das mindestens eine Abgasnachbehandlungssystem ein Rußfilter ist - keine Rußpartikel in nennenswerter Menge mehr aufweist.

Im rückgeführten Abgasstrom enthaltene Rußpartikel würden den in der Ansaugleitung vorgesehenen Verdichter verschmutzen und gegebenenfalls in den Abgas führenden Leitungen angeordnete Absperrelemente in ihrer Funktionstüchtigkeit beeinträchtigen.

Vorteilhaft sind Ausführungsformen der Brennkraftmaschine, bei denen ein Absperrelement zur Einstellung der via der ersten Leitung rückgeführten Abgasmenge vorgesehen ist. Das Absperrelement ist dabei vorzugsweise an der ersten Abzweigung anzuordnen d. h. an der Stelle, an der die erste Leitung zur Abgasrückführung von der Abgasleitung abzweigt. Das Absperrelement kann eine Klappe sein oder auch ein Ventil. Soll beispielsweise kein Abgas mittels Niederdruck-AGR zurückgeführt werden, kann die erste Leitung mittels einer als Absperrelement dienenden Klappe verschlossen werden.

An der ersten Einmündung kann ebenfalls ein Absperrelement vorgesehen werden, welches den Zustrom aus der ersten Rückführleitung und/oder der Ansaugleitung regelt.

Vorteilhaft sind Ausführungsformen der Brennkraftmaschine, bei denen eine zweite Leitung zur Abgasrückführung vorgesehen ist, die stromaufwärts der Turbine aus der mindestens einen Abgasleitung unter Ausbildung einer zweiten Abzweigung abzweigt und stromabwärts des Verdichters in die mindestens eine Ansaugleitung unter Ausbildung einer zweiten Einmündung einmündet.

Gemäß dieser Ausführungsform ist die Brennkraftmaschine mit einer zweiten, sogenannten Hochdruck-AGR ausgestattet d. h. das Abgas wird im Rahmen dieser Abgasrückführung und im Gegensatz zu der erfindungsgemäß grundsätzlich vorhandenen Niederdruck-AGR stromaufwärts der Turbine und nicht stromabwärts der Turbine aus der Abgasleitung abgezweigt d. h. entnommen und stromabwärts des Verdichters wieder in die mindestens eine Ansaugleitung eingeleitet.

Der Einsatz von zwei Abgasrückführungen gestattet die Rückführung größerer Abgasmengen. Die Hochdruck-AGR weist zudem ein besseres Ansprechverhalten auf, auch weil die Niederdruck-AGR in der Regel bzw. vorzugsweise nachbehandeltes Abgas zurückführt, um den Verdichter nicht zu verschmutzen. Dadurch, dass das rückzuführende Abgas bei der Niederdruck-AGR vorzugsweise sowohl die Turbine als auch das Abgasnachbehandlungssystem durchströmt, bevor es in die Ansaugleitung zurückgeführt wird, weist die Niederdruck-AGR im instationären Betrieb der Brennkraftmaschine d. h. bei Änderung der Rückführrate ein weniger schnelles Ansprechverhalten auf als die Hochdruck-AGR, bei der das Abgas direkt stromabwärts des Auslasses noch vor Durchströmen der Turbine abgezweigt wird.

Aus den genannten Gründen ist es daher auch vorteilhaft, die Niederdruck-AGR vorzugsweise im stationären Betrieb der Brennkraftmaschine zu verwenden, wenn ein schnelles Ansprechen der Abgasrückführung nicht erforderlich ist. Hingegen eignet sich die Hochdruck-AGR insbesondere für den instationären Betrieb der Brennkraftmaschine, wenn sich die Rückführrate ändert.

Da die Rückführung von Abgas auch bei der Hochdruck-AGR eine Druckdifferenz d. h. ein Druckgefälle zwischen der Abgasleitung und der Ansaugleitung erfordert und das Abgas vorliegend stromabwärts des Verdichters in die Ansaugleitung d. h. in die bereits komprimierte Ladeluft eingeleitet wird, sind Maßnahmen erforderlich, um das zur Förderung des Abgases erforderliche Druckgefälle zu generieren.

Vorteilhaft sind daher Ausführungsformen der Brennkraftmaschine, bei denen stromaufwärts der zweiten Einmündung und stromabwärts des Verdichters ein Drosselelement in der mindestens einen Ansaugleitung vorgesehen ist. Der über das Drosselelement hinweg generierte Druckverlust führt zu einer Druckabsenkung in der komprimierten Ladeluft stromabwärts des Drosselelementes und unterstutzt auf diese Weise die Ausbildung eines Druckgefälles zwischen der Ansaugleitung und der Abgasleitung bzw. zwischen der zweiten Abzweigung und der zweiten Einmündung.

Vorteilhaft sind Ausführungsformen der Brennkraftmaschine, bei denen der Gasspeicher ein Gasbalg ist, vorzugsweise ein Gasbalg aus Kunststoff, der sein Volumen ändern, insbesondere anpassen kann. Die Rückstellkräfte eines elastischen Gasbalgs können dann bei geöffnetem Absperrelement das bevorratete und unter Druck stehende Abgas in die Ansaugleitung fördern.

Vorteilhaft sind Ausführungsformen der Brennkraftmaschine, bei denen ein Luftmassensensor stromaufwärts des Verdichters und stromabwärts der ersten Einmündung in der Ansaugleitung vorgesehen ist. Dieser Sensor dient der meßtechnischen Erfassung des dem Verdichter zugeführten Gasstroms, der Luft und/oder Abgas enthalten kann, gegebenenfalls auch Kraftstoff.

Vorteilhaft sind Ausführungsformen der Brennkraftmaschine, bei denen die Vorrichtung zum Zuführen von Luft einen Luftmassensensor umfaßt, mit dem die mittels Vorrichtung in die erste Leitung zur Abgasrückführung eingeleitete Luftmenge meßtechnisch erfaßt wird.

Ein Verfahren zum Betreiben einer Brennkraftmaschine nach einer der zuvor genannten Arten ist dadurch gekennzeichnet, dass der Abgasstrom, der über die erste Leitung zur Abgasrückführung zurückgeführt wird, mittels einer Vorrichtung zum Zuführen von Luft mit Luft verdünnt wird.

Das im Zusammenhang mit der erfindungsgemäßen Brennkraftmaschine Gesagte gilt ebenfalls für das erfindungsgemäße Verfahren. Insbesondere wird Bezug genommen auf die verfahrenstechnischen Merkmale, welche im Rahmen der Beschreibung der Brennkraftmaschine erörtert werden.

Vorteilhaft sind Verfahrensvarianten, bei denen die für eine Zuführung mittels Vorrichtung vorgesehene Luft mittels des in der mindestens einen Ansaugleitung vorgesehenen Verdichters gefördert d. h. angesaugt wird, vorzugsweise aus der Umgebung.

Bei Brennkraftmaschinen, die sowohl eine Hochdruck-AGR als auch eine Niederdruck-AGR aufweisen, sind Verfahrensvarianten vorteilhaft, bei denen die Hochdruck-AGR vorzugsweise im instationären Betrieb der Brennkraftmaschine und die Niederdruck-AGR vorzugsweise im stationären Betrieb der Brennkraftmaschine zur Abgasrückführung verwendet wird.

Bei Brennkraftmaschinen, deren Niederdruck-AGR mit einem Gasspeicher ausgerüstet ist, sind Ausführungsformen des Verfahrens vorteilhaft, bei denen zumindest in Phasen, in denen die Niederdruck-AGR nicht zur Abgasrückführung verwendet wird, Abgas via Versorgungsleitung in den Gasspeicher zur Bevorratung eingeleitet wird.

Im Folgenden wird die Erfindung anhand einer Ausführungsform gemäß den Figuren 1 bis 7 näher beschrieben. Hierbei zeigt:

Fig. 1    schematisch eine erste Ausführungsform der Brennkraftmaschine,

Fig. 2    schematisch die in Figur 1 dargestellte Ausführungsform der Brennkraftmaschine in einem ersten Schaltungszustand,

Fig. 3    schematisch die in Figur 1 dargestellte Ausführungsform der Brennkraftmaschine in einem zweiten Schaltungszustand,

Fig. 4    schematisch die in Figur 1 dargestellte Ausführungsform der Brennkraftmaschine in einem dritten Schaltungszustand,

Fig. 5    schematisch die in Figur 1 dargestellte Brennkraftmaschine mit Gasspeicher,

Fig. 6    schematisch die in Figur 5 dargestellte Ausführungsform der Brennkraftmaschine in einem ersten Schaltungszustand, und

Fig. 7    schematisch die in Figur 5 dargestellte Ausführungsform der Brennkraftmaschine in einem zweiten Schaltungszustand.

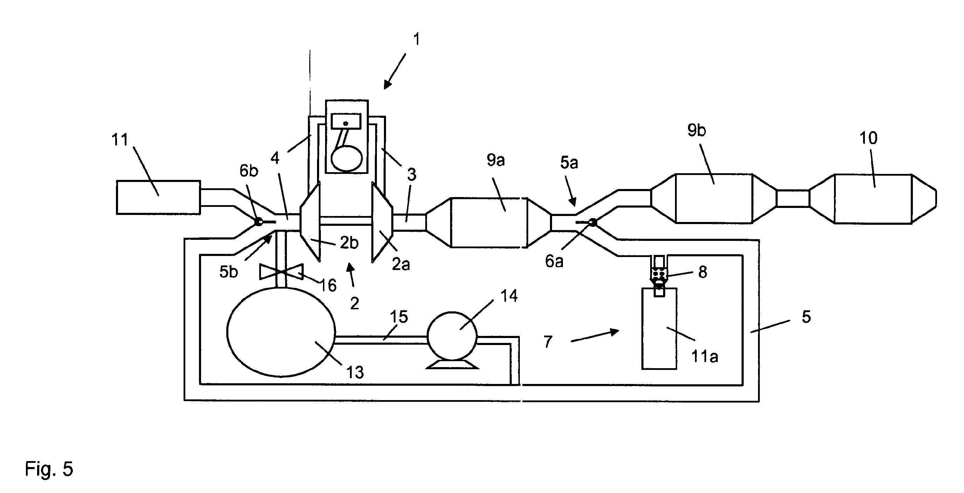

Die Figuren i bis 4 dienen der Erläuterung der Rückführung von Abgas mittels der ersten Leitung 5 zur Abgasrückführung. Die Versorgungsleitung und der in der Versorgungsleitung vorgesehene Gasspeicher sind daher nicht dargestellt. Zur Beschreibung der Funktionsweise des Gasspeichers dienen die Figuren 5 bis 7.

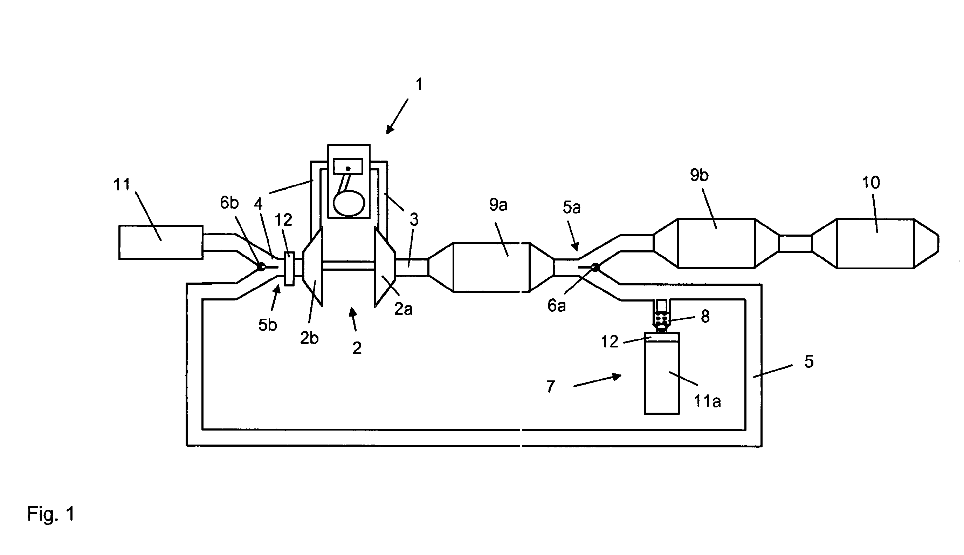

Figur 1 zeigt eine erste Ausführungsform der aufgeladenen Brennkraftmaschine 1, die sich vorliegend außer Betrieb befindet.

Die Brennkraftmaschine 1 verfügt über eine Ansaugleitung 4, über welche den Zylindern Frischluft bzw. Frischgemisch zugeführt wird und über eine Abgasleitung 3 zum Abführen der Verbrennungsgase aus den Zylindern. Die Ansaugleitung 4 ist mit einem Filter 11 ausgerüstet, um die angesaugte Luft zu reinigen.

Zur Aufladung ist die Brennkraftmaschine 1 mit einem Abgasturbolader 2 ausgestattet, wobei die Turbine 2a in der Abgasleitung 3 und der dazugehörige Verdichter 2b des Abgasturboladers 2 in der Ansaugleitung 4 angeordnet ist. Auf diese Weise wird die Verbrennungsluft vor Eintritt in die Zylinder komprimiert, wozu die Abgasenthalpie der heißen Abgase in der Turbine 2a genutzt werden.

Stromabwärts der Turbine 2a sind zwei Abgasnachbehandlungssysteme 9a, 9b in der Abgasleitung 3 vorgesehen und am Ende der Abgasleitung 3 ist ein Schalldämpfer 10 angeordnet.

Zur Abgasrückführung ist eine erste Leitung 5 vorgesehen, die stromabwärts der Turbine 2a aus der Abgasleitung 3 unter Ausbildung einer ersten Abzweigung 5a abzweigt und stromaufwärts des Verdichters 2b in die Ansaugleitung 4 unter Ausbildung einer ersten Einmündung 5b einmündet. Folglich handelt es sich vorliegend um eine Niederdruck-AGR.

Da die erste Abzweigung 5a stromabwärts des ersten Abgasnachbehandlungssystems 9a angeordnet ist, führt die Niederdruck-AGR ausschließlich bereits nachbehandeltes d. h. gereinigtes Abgas zurück.

Zur Einstellung der Abgasmenge, welche über die erste Leitung 5 zurückgeführt wird, bzw. zur Aktivierung und Deaktivierung der Niederdruck-AGR ist ein Absperrelement 6a in Gestalt eine Klappe an der ersten Abzweigung 5a, an der die erste Leitung 5 zur Abgasrückführung von der Abgasleitung 3 abzweigt, angeordnet.

An der ersten Einmündung 5b ist ebenfalls ein Absperrelement 6b in Gestalt einer Klappe vorgesehen, welches den Zustrom aus der ersten Rückführleitung 5 und der Ansaugleitung 4 regelt.

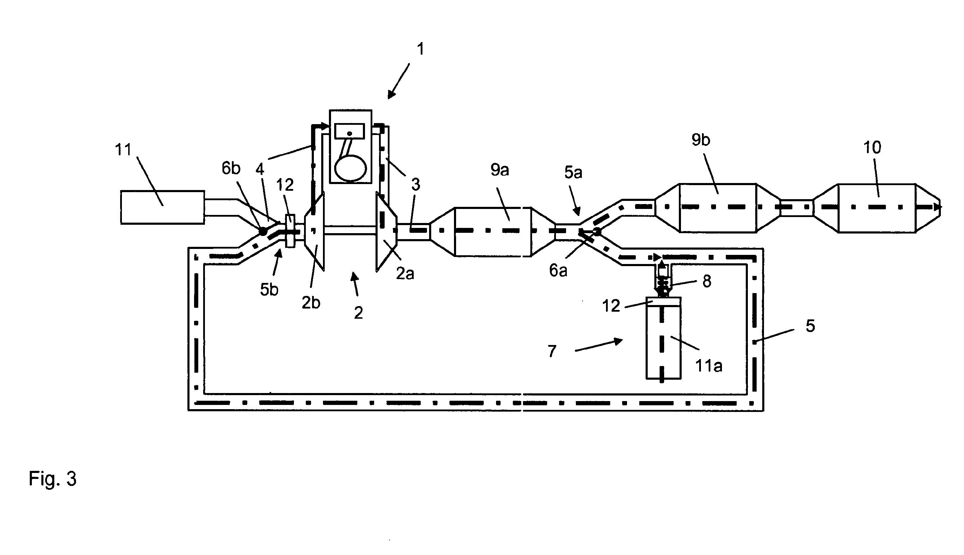

Die verschiedenen Schaltstellungen der Absperrelemente 6a, 6b bzw. Klappen werden im Zusammenhang mit den Figuren 3, 4 und 5 erörtert, welche die erste Ausführungsform der Brennkraftmaschine 1 in unterschiedlichen Betriebszuständen bzw. Schaltzuständen darstellen.

An der ersten Leitung 5 zur Abgasrückführung ist eine Vorrichtung 7 zum Zuführen von Luft vorgesehen. Die Vorrichtung 7 saugt Luft über einen Filter 11a aus der Umgebung an, wobei ein Absperrelement 8 die Verbindung zu der ersten Leitung 5 freigibt, um Luft zur Verdünnung des Abgases in die Rückführleitung 5 einzuleiten, oder aber die Verbindung verschließt.

Es sind zwei Sensoren 12 vorgesehen, mit denen der Massenstrom bestimmt werden kann.

Ein erster Luftmassensensor 12 ist stromaufwärts des Verdichters 2b und stromabwärts der ersten Einmündung 5b in der Ansaugleitung 4 vorgesehen und dient der meßtechnischen Erfassung des dem Verdichter 2b zugeführten Gasstroms, der Luft, Abgas und gegebenenfalls auch Kraftstoff enthalten kann.

Ein zweiter Luftmassensensor 12 ist Bestandteil der Vorrichtung 7 zum Zuführen von Luft und dient zur Bestimmung der in die erste Rückführleitung 5 eingeleiteten Luftmenge.

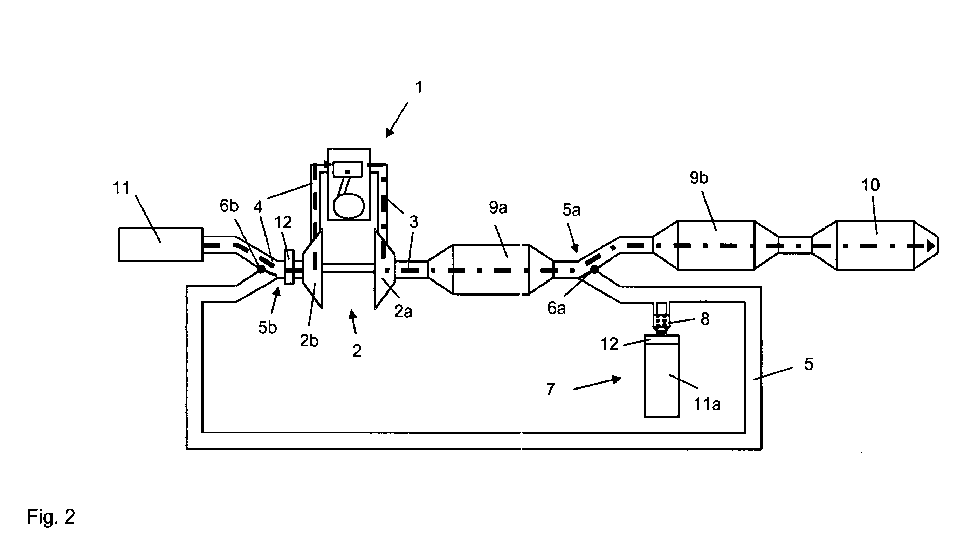

Figur 2 zeigt schematisch die in Figur 1 dargestellte Ausführungsform der Brennkraftmaschine 1 während des Betriebs in einem ersten Schaltungszustand, weshalb im Übrigen Bezug genommen wird auf Figur 1. Für dieselben Bauteile wurden dieselben Bezugszeichen verwendet.

Das Absperrelement 6a an der ersten Abzweigung 5a verschließt die erste Rückführleitung 5, so dass die Niederdruck-AGR in dem Schaltungszustand gemäß Figur 2 deaktiviert ist d. h. kein Abgas zurückführt.

Das an der ersten Einmündung 5b vorgesehene Absperrelement 6b gibt folgerichtig nur die Ansaugleitung 4 frei und verschließt die erste Rückführleitung 5.

Die angesaugte Luft tritt durch den Filter 11 in die Ansaugleitung 4 ein, passiert den Sensor 12, durchströmt den Verdichter 2b und wird in die Zylinder der Brennkraftmaschine 1 geleitet. Die aus den Zylindern in die Abgasleitung 3 abgeführten Abgase durchströmen die Turbine 2a, die Abgasnachbehandlungssysteme 9a, 9b und gelangen gereinigt in die Umgebung. Beide Gasströme, nämlich der Frischluftstrom und der Abgasstrom, sind als gestrichelte Linien dargestellt. Abgas wird vorliegend nicht zurückgeführt.

Figur 3 zeigt schematisch die in Figur 1 dargestellte Ausführungsform der Brennkraftmaschine 1 während des Betriebs in einem zweiten Schaltungszustand, weshalb im Übrigen Bezug genommen wird auf Figur 1. Für dieselben Bauteile wurden dieselben Bezugszeichen verwendet.

Das Absperrelement 6a an der ersten Abzweigung 5a ist in einer Mittelstellung, in der es sowohl die Abgasleitung 3, die zum zweiten Abgasnachbehandlungssystem 9b führt, als auch die erste Rückführleitung 5 freigibt. Das an der ersten Einmündung 5b vorgesehene Absperrelement 6b gibt die erste Rückführleitung 5 frei und verschließt die Ansaugleitung 4.

Gemäß dem Schaltungszustand der Figur 3 ist die Niederdruck-AGR aktiviert d. h. grundsätzlich kann via Rückführleitung 5 Abgas zurückgeführt werden. Vorliegend wird aber mittels der Vorrichtung 7 Luft in die Rückführleitung 5 eingeleitet, weshalb das Absperrelement 8 die Verbindung der Vorrichtung 7 zur Rückführleitung 5 freigibt und die Abgasströmung in der Rückführleitung 5 kurzzeitig blockiert.

Die Brennkraftmaschine 1 bzw. der Verdichter 2b saugt demnach verdünntes Abgas über die Rückführleitung 5 an und damit sowohl Abgas als auch Luft. Die Ansaugleitung 4 wird vorliegend zum Zuführen von Luft nicht benötigt und ist verschlossen. Die Gasströme, nämlich der Abgasstrom, der zur Verdünnung zugeführte Luftstrom und der mit Luft verdünnte rückgeführte Abgasstrom, sind als gestrichelte Linien dargestellt.

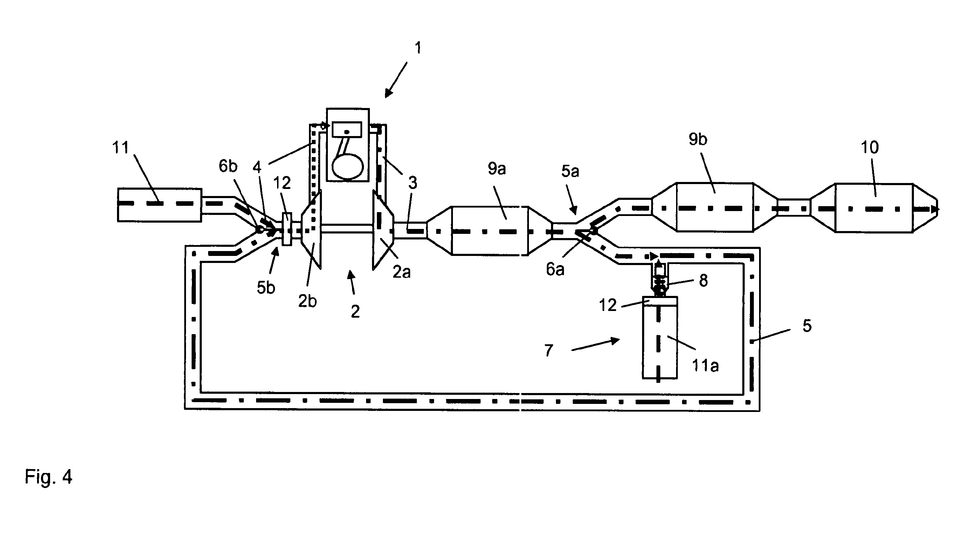

Figur 4 zeigt schematisch die in Figur 1 dargestellte Ausführungsform der Brennkraftmaschine 1 während des Betriebs in einem dritten Schaltungszustand, weshalb im Übrigen Bezug genommen wird auf Figur 1. Für dieselben Bauteile wurden dieselben Bezugszeichen verwendet.

Im Unterschied zu dem Schaltungszustand gemäß Figur 3 ist das Absperrelement 6b an der ersten Einmündung 5b - wie das Absperrelement 6a an der ersten Abzweigung 5a - in einer Mittelstellung, so dass ein Zustrom sowohl aus der Ansaugleitung 4 als auch aus der ersten Rückführleitung 5 möglich ist. Der Brennkraftmaschine 1 wird somit neben dem verdünnten Abgas aus der Rückführleitung 5 zusätzlich Frischluft via Ansaugleitung 4 zugeführt.

Die Gasströme, nämlich der angesaugte Luftstrom, der Abgasstrom, der zur Verdünnung zugeführte Luftstrom und der mit Luft verdünnte rückgeführte Abgasstrom, sind als gestrichelte Linien dargestellt.

Figur 5 zeigt schematisch die in Figur 1 dargestellte Brennkraftmaschine 1 mit Gasspeicher 13, die sich vorliegend außer Betrieb befindet. Es soll nur ergänzend zu Figur 1 ausgeführt werden, weshalb im Übrigen Bezug genommen wird auf Figur 1. Für dieselben Bauteile wurden dieselben Bezugszeichen verwendet.

Es ist eine Versorgungsleitung 15 vorgesehen, die stromabwärts der Vorrichtung 7 zum Zuführen von Luft von der ersten Leitung 5 zur Abgasrückführung abzweigt und stromaufwärts des Verdichters 2b in die Ansaugleitung 4 mündet. In dieser Versorgungsleitung 15 ist ein Gasspeicher 13 angeordnet, welcher der Bevorratung von verdünntem Abgas dient.

In der Versorgungsleitung 15 sind stromaufwärts des Gasspeichers 13 eine Pumpe 14 und stromabwärts des Gasspeichers 13 ein Absperrelement 16 vorgesehen. Die Pumpe 14 dient der Förderung des Abgases in den Speicher 13. Mit dem Absperrelement 16 läßt sich der Gasspeicher 13 von der Ansaugleitung 4 trennen oder aber mit dieser verbinden.

Der Gasspeicher 13 verbessert das Ansprechverhalten der Niederdruck-AGR, weil unter Verwendung des Gasspeichers 13 auch im instationären Betrieb der Brennkraftmaschine 1 eine erhöhte Abgasmenge - durch direkte Entnahme aus dem Gasspeicher 13 - schnell bereitgestellt werden kann.

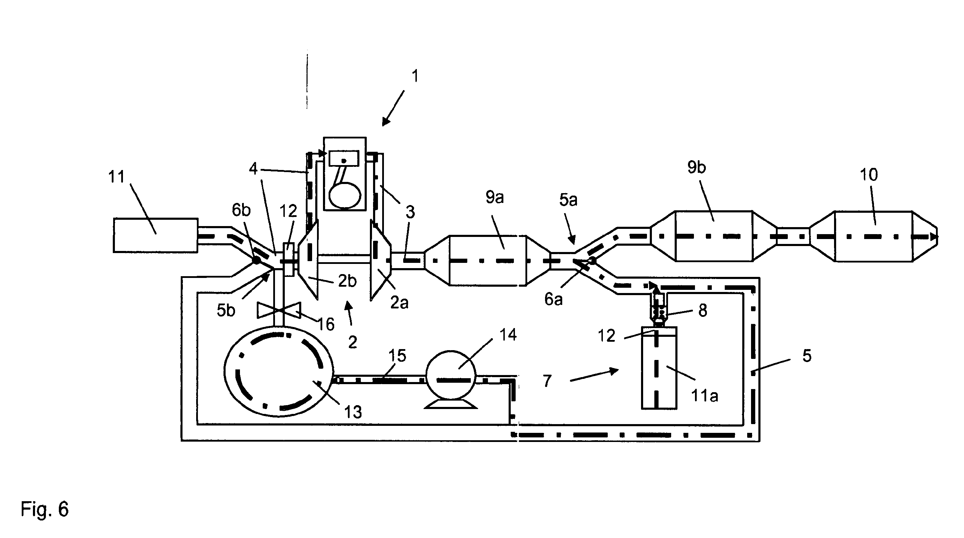

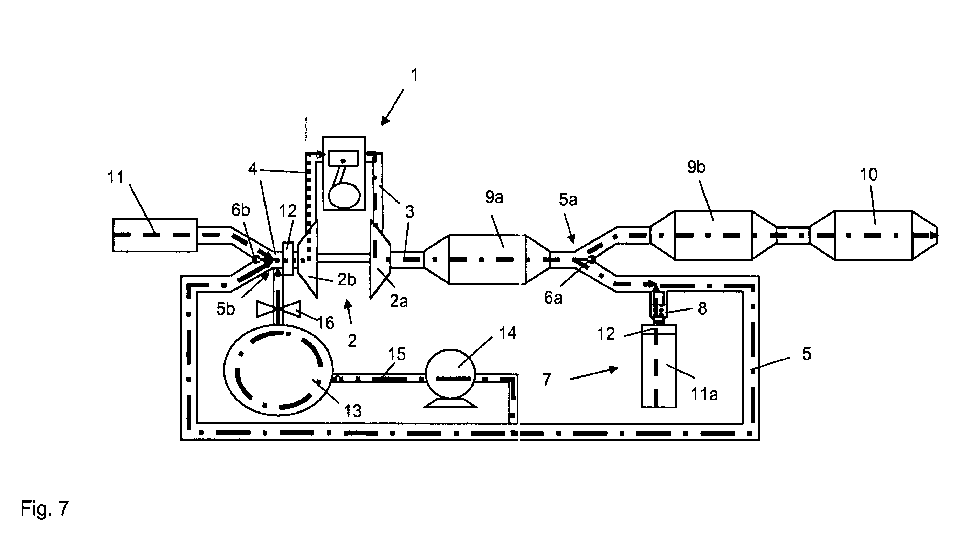

Die Funktionsweise des Gasspeichers 13 wird im Zusammenhang mit den Figuren 6 und 7 beschrieben, welche die Brennkraftmaschine 1 gemäß Figur 5 während des Betriebs zeigen.

Figur 6 zeigt schematisch die in Figur 5 dargestellte, mit Sensoren 12 ausgestattete und in Betrieb befindliche Brennkraftmaschine 1 in einem ersten Schaltungszustand. Hinsichtlich der beiden vorgesehenen Sensoren 12 wird Bezug genommen auf die Beschreibung der Figur 1.

Ausgehend von dem in Figur 2 dargestellten Schaltungszustand ist das Absperrelement 6a an der ersten Abzweigung 5a vorliegend in einer Mittelstellung, in der es sowohl die Abgasleitung 3, die zum zweiten Abgasnachbehandlungssystem 9b führt, als auch die erste Rückführleitung 5 freigibt.

Das an der ersten Einmündung 5b vorgesehene Absperrelement 6b verschließt hingegen die erste Rückführleitung 5 und gibt lediglich die Ansaugleitung 4 frei. Gemäß dem Schaltungszustand dieses Absperrelements 6b ist die Niederdruck-AGR zwar deaktiviert und es wird kein Abgas in die Ansaugleitung 4 zurückgeführt. Die Rückführleitung 5 wird vorliegend aber zur Bevorratung des Gasspeichers 13 genutzt. Insofern wird auch mittels der Vorrichtung 7 Luft in die Rückführleitung 5 eingeleitet, um das dem Gasspeicher 13 zugeführte Abgas zu verdünnen. Das Absperrelement 16 ist geschlossen, so dass der Gasspeicher 13 von der Ansaugleitung 4 getrennt ist.

Die Gasströme, nämlich der via Ansaugleitung 4 angesaugte Luftstrom, der Abgasstrom, der zur Verdünnung zugeführte Luftstrom und der mit Luft verdünnte in den Gasspeicher 13 eingeleitete Abgasstrom, sind als gestrichelte Linien dargestellt.

Figur 7 zeigt schematisch die in Figur 5 dargestellte, mit Sensoren 12 ausgestattete und in Betrieb befindliche Brennkraftmaschine 1 in einem zweiten Schaltungszustand.

Im Unterschied zu dem in Figur 6 dargestellten Schaltungszustand ist das Absperrelement 16 stromabwärts des Gasspeichers 13 geöffnet, so dass der Gasspeicher 13 mit der Ansaugleitung 4 in Verbindung steht und verdünntes Abgas aus dem Speicher 13 in die Ansaugleitung 4 einströmt.

Im Unterschied zu dem Schaltungszustand gemäß Figur 6 ist des Weiteren das Absperrelement 6b an der ersten Einmündung 5b - wie das Absperrelement 6a an der ersten Abzweigung 5a - in einer Mittelstellung, so dass ein Zustrom sowohl aus der Ansaugleitung 4 als auch aus der ersten Rückführleitung 5 möglich ist. Der Brennkraftmaschine 1 wird somit verdünntes Abgas aus der Rückführleitung 5 und Frischluft über die Ansaugleitung 4 zugeführt.

Bezugszeichen

| 1 | aufgeladene Brennkraftmaschine |
| 2 | Abgasturbolader |
| 2a | Turbine |

2b Verdichter
3 Abgasleitung
4 Ansaugleitung
5 erste Leitung zur Abgasrückführung
5a erste Abzweigung
5b erste Einmündung
6a Absperrelement
6b Absperrelement
7 Vorrichtung zum Zuführen von Luft
8 Absperrelement
9a Abgasnachbehandlungssystem
9b Abgasnachbehandlungssystem
10 Schalldämpfer
11 Filter
11a Filter
12 Sensor
13 Gasspeicher
14 Pumpe
15 Versorgungsleitung
16 Absperrelement

AGR Abgasrückführung
$m_{AGR}$ Masse an zurückgeführtem Abgas
$m_{Frischluft}$ Masse an zugeführter Frischluft bzw. Verbrennungsluft
$x_{AGR}$ Abgasrückführrate

**Patentansprüche**

1. Aufgeladene Brennkraftmaschine (1) mit mindestens einem Zylinder, mindestens einer Abgasleitung (3) zum Abführen der Verbrennungsgase aus diesem mindestens einen Zylinder und mindestens einer Ansaugleitung (4) zum Zuführen von Frischluft bzw. Frischgemisch in diesen mindestens einen Zylinder, die mit mindestens einem Abgasturbolader (2) ausgestattet ist, wobei

   ■ eine Turbine (2a) des mindestens einen Abgasturboladers (2) in der mindestens einen Abgasleitung (3) angeordnet ist und ein zu dieser Turbine (2a) zugehöriger Verdichter (2b) des mindestens einen Abgasturboladers (2) in der mindestens einen Ansaugleitung (4) angeordnet ist,
   ■ eine erste Leitung (5) zur Abgasrückführung vorgesehen ist, die stromabwärts der Turbine (2a) aus der mindestens einen Abgasleitung (3) unter Ausbildung einer ersten Abzweigung (5a) abzweigt und stromaufwärts des Verdichters (2b) in die mindestens eine Ansaugleitung (4) unter Ausbildung einer ersten Einmündung (5b) einmündet, und
   ■ an der ersten Leitung (5) zur Abgasrückführung eine Vorrichtung (7) zum Zuführen von Luft vorgesehen ist,
   **dadurch gekennzeichnet, dass**

   ■ eine Versorgungsleitung (15) vorgesehen ist, die stromabwärts der Vorrichtung (7) zum Zuführen von Luft von der ersten Leitung (5) zur Abgasrückführung abzweigt und in die Ansaugleitung (4) mündet, wobei in dieser Versorgungsleitung (15) ein Gasspeicher (13) angeordnet ist.

2. Aufgeladene Brennkraftmaschine (1) nach Anspruch 1, **dadurch gekennzeichnet, dass** die Vorrichtung (7) zum Zuführen von Luft eine Verbindung zu der ersten Leitung (5) aufweist und ein Absperrelement (8) zum Verschließen und Freigeben dieser Verbindung vorgesehen ist.

3. Aufgeladene Brennkraftmaschine (1) nach Anspruch 2, **dadurch gekennzeichnet, dass** das Absperrelement (8) ein in der ersten Leitung (5) angeordnetes Drei-Zwei-Wege-Ventil ist.

4. Aufgeladene Brennkraftmaschine (1) nach einem der vorherigen Ansprüche, **dadurch gekennzeichnet, dass** die Vorrichtung (7) zum Zuführen von Luft einen Filter (11a) umfasst.

5. Aufgeladene Brennkraftmaschine (1) nach einem der vorherigen Ansprüche, bei der stromabwärts der Turbine (2a) mindestens ein Abgasnachbehandlungssystem (9a, 9b) in der mindestens einen Abgasleitung (3) vorgesehen ist, **dadurch gekennzeichnet, dass** das mindestens eine Abgasnachbehandlungssystem (9a) stromaufwärts der ersten Abzweigung (5a) angeordnet ist.

6. Aufgeladene Brennkraftmaschine (1) nach einem der vorherigen Ansprüche, **dadurch gekennzeichnet, dass** ein Absperrelement (6a) zur Einstellung der via der ersten Leitung (5) rückgeführten Abgasmenge vorgesehen ist.

7. Aufgeladene Brennkraftmaschine (1) nach einem der vorherigen Ansprüche, **dadurch gekennzeichnet, dass** eine zweite Leitung zur Abgasrückführung vorgesehen ist, die stromaufwärts der Turbine (2a) aus der mindestens einen Abgasleitung (3) unter Ausbildung einer zweiten Abzweigung abzweigt und stromabwärts des Verdichters (2b) in die mindestens eine Ansaugleitung (4) unter Ausbildung einer zweiten Einmündung einmündet.

8. Aufgeladene Brennkraftmaschine (1) nach Anspruch 7, **dadurch gekennzeichnet, dass** stromaufwärts der zweiten Einmündung und stromabwärts des Verdichters (2b) ein Drosselelement in der mindestens einen Ansaugleitung (4) vorgesehen ist.

9. Aufgeladene Brennkraftmaschine (1) nach einem der vorherigen Ansprüche, **dadurch gekennzeich-**

**net, dass** in der Versorgungsleitung (15) eine Pumpe (14) stromaufwärts des Gasspeichers (13) und ein Absperrelement (16) stromabwärts des Gasspeichers (13) vorgesehen sind.

## Claims

1. A supercharged internal combustion engine (1) having at least one cylinder, at least one exhaust line (3) for carrying the exhaust gases out of this at least one cylinder and at least one intake line (4) for feeding in fresh air or fresh mixture into this at least one cylinder, which internal combustion engine (1) is equipped with at least one exhaust gas turbocharger (2), wherein

   ■ a turbine (2a) of the at least one exhaust gas turbocharger (2) is arranged in the at least one exhaust line (3), and a compressor, (2b), associated with this turbine (2a), of the at least one exhaust gas turbocharger (2) is arranged in the at least one intake line (4),
   ■ a first line (5) for recirculating exhaust gas is provided, which line (5) branches off from the at least one exhaust line (3) downstream of the turbine (2a) to form a first branch (5a), and opens into the at least one intake line (4) upstream of the compressor (2b) to form a first junction (5b), and
   ■ a device (7) for feeding in air is provided on the first line (5) for recirculating exhaust gas, **characterized in that**
   ■ a supply line (15) is provided which branches off from the first line (5) for recirculating exhaust gas downstream of the device (7) for feeding in air, and opens into the intake line (4), wherein a gas accumulator (13) is arranged in this supply line (15).

2. Supercharged internal combustion engine (1) according to Claim 1, **characterized in that** the device (7) for feeding in air has a connection to the first line (5), and a shut-off element (8) for closing and opening this connection is provided.

3. Supercharged internal combustion engine (1) according to Claim 2, **characterized in that** the shut-off element (8) is a three/two-way valve arranged in the first line (5).

4. Supercharged internal combustion engine (1) according to one of the preceding claims, **characterized in that** the device (7) for feeding in air comprises a filter (11a).

5. Supercharged internal combustion engine (1) according to one of the preceding claims, in which internal combustion engine (1) at least one exhaust gas post-treatment system (9a, 9b) is provided in the at least one exhaust line (3) downstream of the turbine (2a), **characterized in that** the at least one exhaust gas post-treatment system (9a) is arranged upstream of the first branch (5a).

6. Supercharged internal combustion engine (1) according to one of the preceding claims, **characterized in that** a shut-off element (6a) for setting the quantity of exhaust gas which is recirculated via the first line (5) is provided.

7. Supercharged internal combustion engine (1) according to one of the preceding claims, **characterized in that** a second line for recirculating exhaust gas is provided, which line (17) branches off from the at least one exhaust line (3) upstream of the turbine (2a) to form a second branch and opens into the at least one intake line (4) downstream of the compressor (2b) to form a second junction.

8. Supercharged internal combustion engine (1) according to Claim 7, **characterized in that** a throttle element is provided in the at least one intake line (4) upstream of the second junction and downstream of the compressor (2b).

9. Supercharged internal combustion engine (1) according to one of the preceding claims, **characterized in that**, in the supply line (15), a pump (14) is provided upstream of the gas accumulator (13) and a shut-off element (16) is provided downstream of the gas accumulator (13).

## Revendications

1. Moteur à combustion interne suralimenté (1) avec au moins un cylindre, au moins une conduite de gaz d'échappement (3) pour évacuer les gaz brûlés hors dudit au moins un cylindre et au moins une conduite d'aspiration (4) pour amener de l'air frais ou un mélange frais dans ledit au moins un cylindre, qui est équipé d'au moins un turbocompresseur à gaz d'échappement (2), dans lequel

   • une turbine (2a) dudit au moins un turbocompresseur à gaz d'échappement est disposée dans ladite au moins une conduite de gaz d'échappement (3) et un compresseur (2b) du turbocompresseur à gaz d'échappement (2) correspondant à cette turbine (2a) est disposé dans ladite au moins une conduite d'aspiration (4),
   • il est prévu une première conduite (5) pour le recyclage de gaz d'échappement, qui est dérivée en aval de la turbine (2a) à partir de ladite au moins une conduite de gaz d'échappement (3) en formant une première dérivation (5a) et qui débouche en amont du compresseur (2b) dans ladite au moins une conduite d'aspiration (4) en formant une première embouchure (5b), et

• il est prévu un dispositif (7) pour l'amenée d'air à la première conduite (5) pour le recyclage de gaz d'échappement,

**caractérisé en ce que**

• il est prévu une conduite d'alimentation (15), qui est dérivée en aval du dispositif (7) pour l'amenée d'air à partir de la première conduite (5) pour le recyclage de gaz d'échappement et qui débouche dans la conduite d'aspiration (4), dans lequel un accumulateur de gaz (13) est disposé dans cette conduite d'alimentation (15).

2. Moteur à combustion interne suralimenté (1) selon la revendication 1, **caractérisé en ce que** le dispositif (7) pour l'amenée d'air présente un raccordement à la première conduite (5) et il est prévu un élément d'arrêt (8) pour fermer et libérer ce raccordement.

3. Moteur à combustion interne suralimenté (1) selon la revendication 2, **caractérisé en ce que** l'élément d'arrêt (8) est une soupape à trois-deux voies disposée dans la première conduite (5).

4. Moteur à combustion interne suralimenté (1) selon l'une quelconque des revendications précédentes, **caractérisé en ce que** le dispositif (7) pour l'amenée d'air comprend un filtre (11a).

5. Moteur à combustion interne suralimenté (1) selon l'une quelconque des revendications précédentes, dans lequel il est prévu en aval de la turbine (2a) au moins un système de post-traitement des gaz d'échappement (9a, 9b) dans ladite au moins une conduite de gaz d'échappement (3), **caractérisé en ce que** ledit au moins un système de post-traitement des gaz d'échappement (9a) est disposé en amont de la première dérivation (5a).

6. Moteur à combustion interne suralimenté (1) selon l'une quelconque des revendications précédentes, **caractérisé en ce qu'**il est prévu un élément d'arrêt (6a) pour le réglage du débit de gaz d'échappement recyclé via la première conduite (5).

7. Moteur à combustion interne suralimenté (1) selon l'une quelconque des revendications précédentes, **caractérisé en ce qu'**il est prévu une deuxième conduite pour le recyclage de gaz d'échappement, qui est dérivée en amont de la turbine (2a) à partir de ladite au moins une conduite de gaz d'échappement (3) en formant une deuxième dérivation et qui débouche en aval du compresseur (2b) dans ladite au moins une conduite d'aspiration (4) en formant une deuxième embouchure.

8. Moteur à combustion interne suralimenté (1) selon la revendication 7, **caractérisé en ce qu'**il est prévu en amont de la deuxième embouchure et en aval du compresseur (2b) un élément d'étranglement dans ladite au moins une conduite d'aspiration (4).

9. Moteur à combustion interne suralimenté (1) selon l'une quelconque des revendications précédentes, **caractérisé en ce qu'**il est prévu dans la conduite d'alimentation (15) une pompe (14) en amont de l'accumulateur de gaz (13) et un élément d'arrêt (16) en aval de l'accumulateur de gaz (13).

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 9421145 U1